# EUROPEAN PATENT APPLICATION

(11) **EP 3 439 415 A1**
(43) Date of publication of application: **06.02.2019**
(21) Application number: 17774369.7
(22) Date of filing: 16.03.2017
(51) Int. Cl.: H04W 74/08, H04W 92/10

(54) **USER DEVICE AND COMMUNICATION METHOD**

(30) Priority: 31.03.2016 JP 2016073459
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2017/010586
(87) International publication number: WO 2017/169825

(57) **Abstract**

There is provided user equipment of a radio communication system including a base station and the user equipment, the user equipment includes a receiver that receives a plurality of user equipment identifier candidates from the base station; a selector that selects one user equipment identifier from the plurality of user equipment identifier candidates; and a transmitter that transmits a signal of an uplink shared channel using the one user equipment identifier that is selected, without performing contention resolution of the user equipment identifier used by the user equipment with the base station.

## Description

### TECHNICAL FIELD

The present invention relates to user equipment and a communication method.

### BACKGROUND ART

In a long term evolution (LTE) standard, a next-generation wireless communication system which is called a 5G communication system has been studied in order to further increase system capacity and a data transmission rate and to further reduce latency in a wireless section.

In the 5G communication system, various element techniques have been studied in order to satisfy the requirements that a delay in the wireless section is reduced to 1 ms or less while a throughput of 10 Gbps or more is obtained. In addition, an element technique that enables a large number of machine-type communication (MCT) terminals to transmit data through a 5G wireless network has been studied in order to respond to a service typified by the Internet of things (IoT). A technique that enables a large number of MTC terminals to access a network is called massive machine-type-communications (mMTC) in the 5G communication system.

### Prior Art Document

### [Non-Patent Document]

Non-Patent Document 1: 3GPP TR38.913 V0.2.0 (2016-02)
Non-Patent Document 2: 3GPP TS36.300 V13.2.0 (2015-12)

### SUMMARY OF THE INVENTION

### [PROBLEM TO BE SOLVED BY THE INVENTION]

Here, when a large number of MTC terminals access the network, there is a concern that the number of signaling messages (control signals) which are transmitted to and received from the network increases significantly. For example, the LTE system according to the related art adopts an access method in which a base station controls the entire uplink (UL) communication using a random access procedure (RA procedure). If a large number of MTC terminals access the network, the number of signaling messages used in the RA procedure increases significantly.

Accordingly, in order to reduce the number of signaling messages, an access method can be considered such that a base station does not control the entire UL communication and allows UL signal contention between the MTC terminals to reduce the number of signaling messages. In the LTE system according to the related art, a technique in which the RA procedure is performed using four messages Message1 through Message4 is defined, as disclosed in Non-Patent Document 2. For example, it can be considered to use an access method such that data is directly transmitted to a network without using signaling messages corresponding to Message1 through Message4, or an access method such that only the signaling messages corresponding to Message1 and Message2 are used while omitting Message3 and Message4.

In the RA procedure in the LTE system according to the related art, allocation of a UE identifier (C-RNTI) can be suitably performed by allocating, by a base station, a temporary UE identifier (temporary C-RNTI) to user equipment using Message 2, and by resolving contention of the UE identifier between units of user equipment using Message3 and Message4 (namely, by ensuring that the temporary UE identifier is not allocated to a plurality of units of user equipment). Accordingly, if the above-described access method is used so as to reduce an amount of signaling messages, a problem arises as to how to allocate UE identifiers.

However, in 3GPP, there is no technique for suitably performing allocation of UE identifiers to units of user equipment when the above-described access method is used.

The disclosed technique has been developed in view of the above-mentioned problems and an object of the disclosed technique is to provide a technique that can appropriately allocate a UE identifier to user equipment.

### [MEANS FOR SOLVING THE PROBLEM]

User equipment according to the disclosed technology is user equipment of a radio communication system including a base station and the user equipment, the user equipment including a receiver that receives a plurality of user equipment identifier candidates from the base station; a selector that selects one user equipment identifier from the plurality of user equipment identifier candidates; and a transmitter that transmits a signal of an uplink shared channel using the one user equipment identifier that is selected, without performing contention resolution of the user equipment identifier used by the user equipment with the base station.

### [ADVANTAGE OF THE INVENTION]

According to the disclosed technique, a technique is provided with which a UE identifier can be appropriately allocated to user equipment.

### BRIEF DESCRIPTION OF DRAWINGS

Fig. 1 is a diagram illustrating an example of a configuration of a wireless communication system according to an embodiment;
Fig. 2 is a diagram illustrating a random access procedure (RA procedure) defined in LTE;
Fig. 3 is a diagram illustrating an example of an access method used in the embodiment;
Fig. 4 is a sequence diagram illustrating an example of the procedure of a UE-ID allocation method (1) in the embodiment;
Fig. 5 is a sequence diagram illustrating an example of the procedure of a UE-ID allocation method (2) in the embodiment;
Fig. 6 is a sequence diagram illustrating an example of the procedure of a UE-ID contention avoidance method in the embodiment;
Fig. 7 is a diagram illustrating an example of the functional configuration of user equipment according to the embodiment;
Fig. 8 is a diagram illustrating an example of the functional configuration of a base station according to the embodiment;
Fig. 9 is a diagram illustrating an example of the hardware configuration of the user equipment according to the embodiment; and
Fig. 10 is a diagram illustrating an example of the hardware configuration of the base station according to the embodiment.

### [EMBODIMENTS OF THE INVENTION]

An embodiment of the invention is described below by referring to the drawings. The following embodiment is illustrative and the embodiment to which the invention is applied is not limited to the following embodiment. For example, it is assumed that a wireless communication system according to this embodiment is a system based on LTE (including 5G). However, the invention is not limited to LTE (including 5G) and can be applied to other communication systems. Note that, in this specification and the claims, "LTE" is used in a broad meaning including, not only a communication scheme corresponding to Release 8 or 9 of 3GPP, but also Release 10, 11, 12, or 13, or the fifth generation communication scheme corresponding to on and after Release 14 of 3GPP.

In this embodiment, an identifier that is allocated to each user equipment in order to uniquely identify the user equipment in a wireless network is referred to as UE-ID. However, the invention is not limited to this. For example, in this embodiment, the meaning of UE-ID includes an UE identifier, C-RNTI, and an identifier with a name that is likely to be newly defined in the 5G communication system.

### <System configuration>

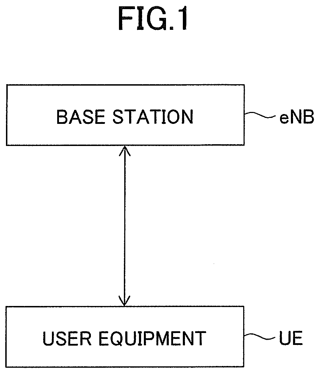

Fig. 1 is a diagram illustrating an example of a configuration of a wireless communication system according to this embodiment. As illustrated in Fig. 1, the wireless communication system according to this embodiment includes a base station eNB and user equipment UE. In the example illustrated in Fig. 1, one base station eNB and one user equipment UE are depicted. However, the wireless communication system may include a plurality of base stations eNB or a plurality of units of user equipment UE.

### <RA Procedure in LTE>

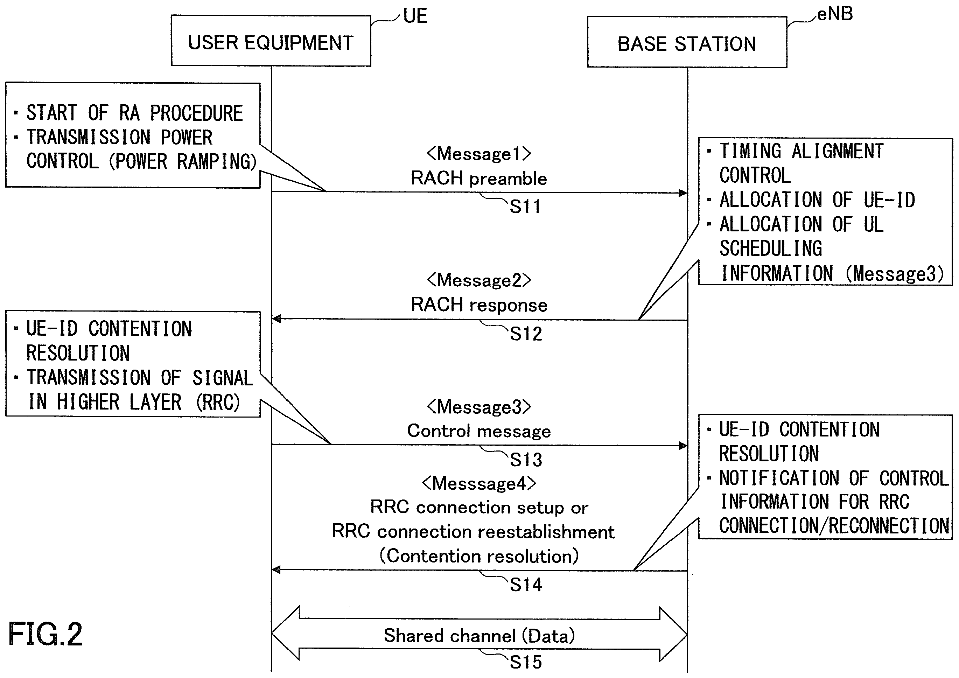

Here, a random access procedure (RA procedure) which is defined in the LTE standard is described with reference to Fig. 2. Before the RA procedure starts, the user equipment UE receives a synchronizing signal transmitted from the base station eNB and performs radio frame synchronization (including symbol timing synchronization). In addition, the user equipment UE receives broadcast information (a master information block (MIB) and a system information block (SIB)) and acquires various kinds of information related to a system bandwidth, a system frame number (SFN), and cells and various kinds of information for performing the RA procedure.

First, the user equipment UE selects an arbitrary RA preamble from a plurality of RA preamble candidates and transmits the selected RA preamble (also referred to as a RACH preamble) to the base station eNB (S11). A message for transmitting the RA preamble is referred to as Message1 and is used by the user equipment UE to start the RA procedure. Then, the base station eNB detects the RA preamble transmitted from the user equipment UE and transmits an RACH response to the user equipment UE (S12). The RACH response is referred to as Message2 and includes the detected RA preamble, temporary UE-ID (temporary cell radio network temporary identifier (temporary C-RNTI)), timing alignment control information (transmission timing information), and uplink (UL) scheduling information (UL grant for transmitting Message3).

Subsequently, the user equipment UE transmits a control message to the base station eNB according to the transmission timing information included in the RACH response, using radio resources designated by the UL scheduling information in the RACH response (S13). The control message is referred to as Message3 and includes a signal in a higher layer (RRC). In addition, the user equipment UE transmits a control message including a terminal identifier (UE contention resolution identity) to the base station eNB, using the temporary UE-ID included in the RACH response.

Subsequently, the base station eNB receives the control message, using the temporary UE-ID (temporary C-RNTI), and transmits an RRC message (RRC connection setup or RRC connection reestablishment) for RRC connection or RRC reconnection to the user equipment UE (S14). The RRC message is referred to as Message4. Here, the base station eNB inserts the terminal identifier (UE contention resolution identity) included in the control message into the RRC message and transmits the RRC message. When receiving the control messages from a plurality of units of user equipment UE, the base station eNB selects any one of the control messages transmitted from the units of user equipment UE, inserts the terminal identifier (UE contention resolution identity) included in the selected control message into the RRC message and transmits the RRC message.

When the terminal identifier which has been inserted into the control message by the user equipment UE itself is included in the RRC message, the user equipment UE determines that the RA procedure has succeeded. When the terminal identifier is not included in the RRC message, the user equipment UE determines that the RA procedure has failed (the RA procedure has collided with the RA procedure of another user equipment UE).

Subsequently, the user equipment UE which determines that the RA procedure has succeeded starts transmitting and receiving data to and from the base station eNB, using a shared channel (S15). The user equipment UE regards the temporary UE-ID as UE-ID (C-RNTI) allocated to the user equipment UE. In addition, the user equipment UE which determines that the RA procedure has failed increases transmission power used to transmit the RA preamble and performs Step S11 again. This procedure is referred to as transmission power control (power ramping).

The above-mentioned RA procedure is summarized as follows. As illustrated in Fig. 2, "transmission power control" is performed by Message1, "timing alignment control", "UE-ID allocation", and "UL scheduling information allocation" are controlled by Message2, and "UE-ID contention resolution" is controlled by Message3 and Message4.

### <For Access Method Used in This Embodiment>

In this embodiment, as the access method that is used to access the network by the user equipment UE which does not have a radio link established with the base station eNB, an access method in which the number of signaling messages is less than that in the RA procedure used in the LTE standard according to the related art is used.

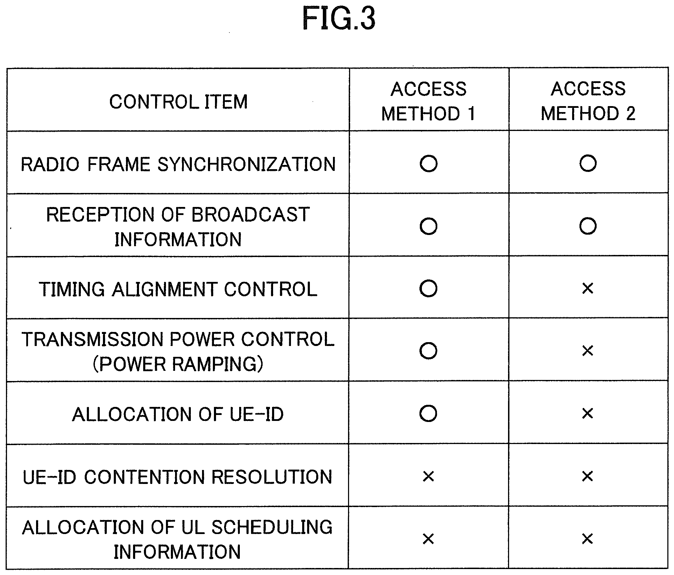

Fig. 3 is a diagram illustrating an example of the access method used in the embodiment. Access method 1 is an access method in which messages are transmitted to and received from the base station eNB at least once. Access method 1 may be, for example, an access method that supports the control of "radio frame synchronization", "broadcast information reception", "timing alignment control", "transmission power control", and "UE-ID allocation" and uses only signaling messages corresponding to Message1 and Message2 in the RA procedure in LTE.

Access method 2 is an access method that directly transmits data to the network, without performing the RA procedure. Access method 2 may be, for example, an access method that supports only the control of "radio frame synchronization" and "broadcast information reception".

The above-mentioned access methods 1 and 2 are illustrative and the invention is not limited thereto. This embodiment may be applied to any access method in which the control of "UE-ID contention resolution" is not performed in the LTE according to the related art.

### <UE-ID Allocation Method>

In this embodiment, the base station eNB notifies the user equipment UE of a plurality of UE-ID candidates in advance. The user equipment UE selects one UE-ID from the plurality of UE-ID candidates and transmits a UL signal (an uplink shared channel signal) using the selected UE-ID.

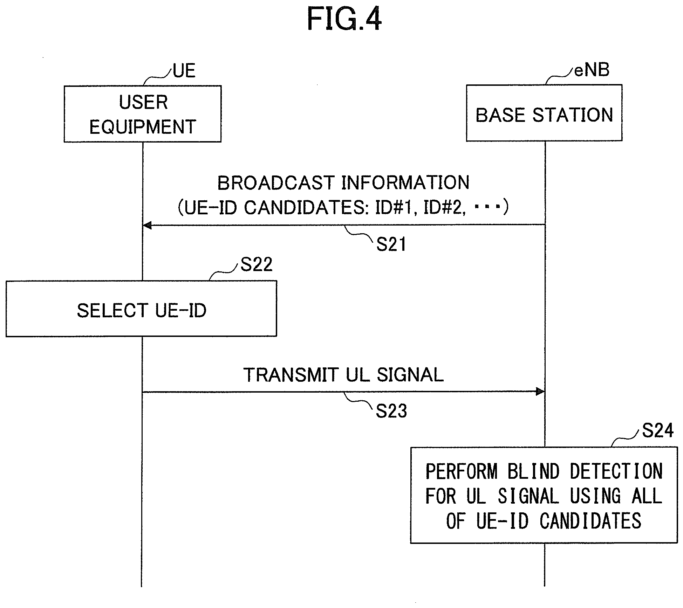

Fig. 4 is a sequence diagram illustrating an example of the procedure of a UE-ID allocation method (1) according to the embodiment. It is assumed that the UE-ID allocation method (1) is used when the above-mentioned access method 2 is applied.

First, the base station eNB broadcasts a plurality of UE-ID candidates to the user equipment UE, using broadcast information (S21). Then, the user equipment UE randomly selects one UE-ID from the plurality of UE-ID candidates (S22). The user equipment UE generates, for example, a scramble sequence of a reference signal to be mapped to a UL signal (unlink shared channel signal) and a cyclic redundancy code (CRC) to be given to the UL signal and transmits the UL signal, using the selected UE-ID (S23). Then, the base station eNB performs blind detection for the UL signal received from the user equipment UE, using all of the plurality of UE-ID candidates broadcasted to the user equipment UE in Step S21 (S24) (that is, for example, the generation of the scramble sequence of the reference signal and a CRC check are tried in this order, using all of the UE-ID candidates).

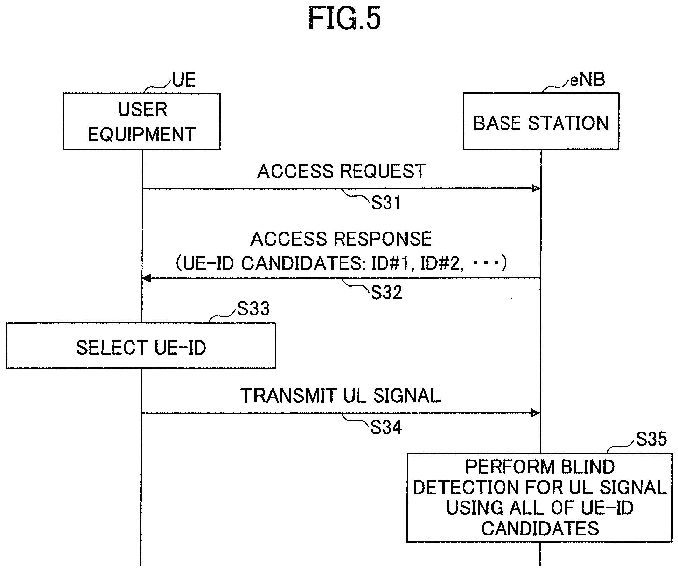

Fig. 5 is a sequence diagram illustrating an example of the procedure of a UE-ID allocation method (2) according to the embodiment. It is assumed that the UE-ID allocation method (2) is used when the above-mentioned access method 1 is applied.

First, the user equipment UE transmits an access request message to the base station eNB (S31). The access request message means a message (a message corresponding to Message1 in the RA procedure in LTE) that is transmitted first when the user equipment UE accesses the wireless network. Then, the base station eNB transmits an access response message including the plurality of UE-ID candidates to the user equipment UE (S32). The access response message means a response message (a message corresponding to Message2 in the RA procedure in LTE) which is transmitted from the base station eNB in response to the access request message. The procedure of Steps S33 to S35 is the same as that of Steps S22 to S24 illustrated in Fig. 4 and the description thereof will not be repeated.

In the UE-ID allocation methods (1) and (2), the base station eNB may explicitly notify the user equipment UE of the UE-ID candidates (for example, UE-ID#0, UE-ID#1, ..., UE-ID#64) or may notify the user equipment UE of the range of UE-IDs in order to reduce the number of instruction bits. For example, the base station eNB may designate the lower limit (for example, UE-ID#0) and the upper limit (for example, UE-ID#64) of a certain UE-ID or may designate the lower limit (for example, UE-ID#0) and the allowable range (for example, +64) of the UE-ID. Alternatively, the base station eNB may notify only a lower limit value (for example, UE-ID#0) and the allowable range (for example, +64) may be common to all of the units of user equipment UE. In all of the above-mentioned examples, the designated range of the UE-ID is from UE-ID#0 to UE-ID#64.

### <UE-ID Contention Avoidance>

In the access method used in this embodiment, the control of "UE-ID contention resolution" is not performed. Therefore, in the UE-ID allocation method described in "<UE-ID Allocation Method>", a plurality of units of user equipment UE may select the same UE-ID. For this reason, in this embodiment, the user equipment UE may insert a random value into the UL signal and transmit the UL signal to the base station eNB. Even if a plurality of units of user equipment UE select the same UE-ID, the base station eNB can detect UE-ID contention since the possibility that the units of user equipment UE will select the same random value is low.

The number of bits of the random value may be a value that is defined by all of the units of user equipment UE in advance or may be broadcasted as broadcast information from the base station eNB.

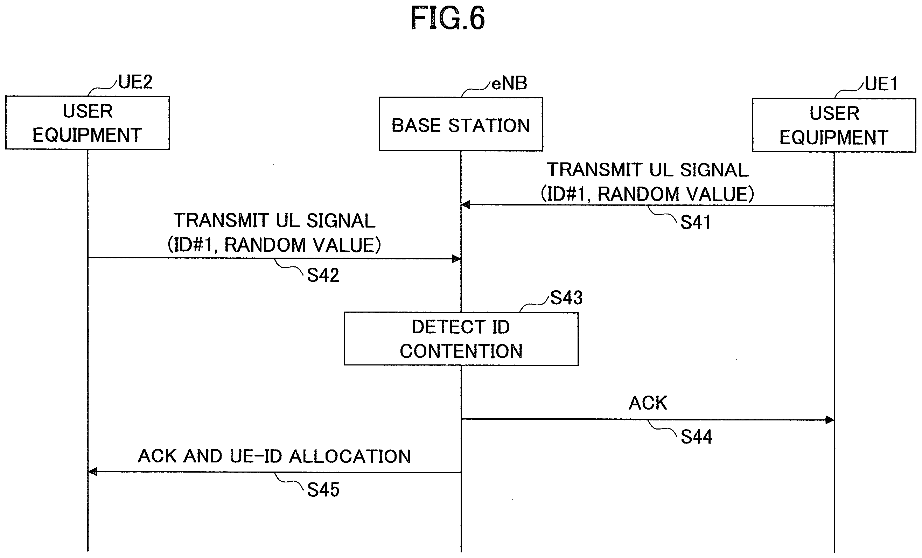

Fig. 6 is a sequence diagram illustrating an example of the procedure of an UE-ID contention avoidance method according to the embodiment. It is assumed that user equipment UE1 and user equipment UE2 have completed the procedure described in Fig. 4 or Fig. 5 and recognize a plurality of UE-ID candidates.

First, the user equipment UE1 randomly selects one UE-ID from the plurality of UE-ID candidates and selects a random value to be inserted into the UL signal. The number of digits of the random value to be inserted into the UL signal and the range of the random value are arbitrary. Then, the user equipment UE1 generates, for example, the scramble sequence of the reference signal to be mapped to the UL signal (uplink shared channel signal) and CRC to be given to the UL signal and transmits the UL signal including the random value, using the selected UE-ID (S41). Then, the user equipment UE2 performs the same operation as the user equipment UE1 and transmits the UL signal including a random value (S42). Here, it is assumed that the user equipment UE1 and the user equipment UE2 select the same UE-ID (ID#1) and different random values.

Subsequently, the base station eNB performs blind detection for two UL signals received from the user equipment UE1 and the user equipment UE2, using all of the plurality of UE-ID candidates. Here, the base station eNB recognizes two UL signals received from the user equipment UE1 and the user equipment UE2 as signals generated using the same UE-ID (ID#1). Then, the base station eNB checks the random numbers included in the two UL signals in order to determine whether the two received UL signals have been transmitted from the same user equipment UE or different units of user equipment UE. Here, since different random values are included in the UL signals, the base station eNB can determine that the two received UL signals have been transmitted from different units of user equipment UE (S43).

Subsequently, the base station eNB transmits ACK for one (for example, the UL signal that has been received first) of the two UL signals (S44) and transmits ACK and UE-ID to be newly allocated (UE-ID different from ID#1) for the other UL signal (S45). In Step S45, the base station eNB may not allocate a new UE-ID, may return NACK, and may end the process.

The radio resources with which the user equipment UE transmits the UL signal in Steps S41 and S42 may be determined according to the random value selected by the user equipment UE. For example, specific radio resources (time and frequency resources) corresponding to the random value may be preconfigured in the user equipment UE and the user equipment UE may transmit the UL signal, using the radio resources corresponding to the random value. In this case, when a plurality of units of user equipment UE transmit the UL signals, the radio resources are randomized and it is possible to reduce the possibility that the UL signals transmitted by the plurality of units of user equipment UE will interfere with each other (the UL signals are transmitted using the same radio resources).

As another example, when the user equipment UE acquires a plurality of UE-ID candidates from the access response (S32 in Fig. 5), the user equipment UE may calculate a back-off timer on the basis of the selected random value, receive an access response from the base station eNB (S32 in Fig. 5), and transmit the UL signal (S41 or S42 in Fig. 6) after the back-off timer expires. In this case, the time from the reception of the access response to the transmission of the UL signal by the user equipment UE is randomized and it is possible to reduce the possibility that the UL signals transmitted by the plurality of units of user equipment UE will interfere with each other (the UL signals are transmitted using the same radio resources).

### <Correction of UE-ID Candidates>

Instead of selecting one UE-ID from a plurality of UE-ID candidates reported from the base station eNB (the candidates reported at S21 of FIG. 4 or S32 of FIG. 5), the user equipment UE may perform predetermined calculation for the plurality of UE-ID candidates to correct the UE-ID candidates and select one UE-ID from the corrected UE-ID candidates. Here, the base station eNB needs to be aware of the correction method used by the user equipment UE. In the following, examples of the specific correction method are described.

### [Correction Method 1 (Addition)]

The user equipment UE adds SFN (or a sub-frame number or a slot number) when the UL signal is transmitted to a plurality of UE-ID candidates to correct the plurality of UE-ID candidates. For example, when a plurality of notified UE-ID candidates are "ID#1, ID#2, and ID#3" and SFN when the UL signal is transmitted is "2", the corrected UE-ID candidates are "ID#3, ID#4, and ID#5".

### [Correction Method 2 (Multiplication)]

The user equipment UE multiplies a plurality of UE-ID candidates by SFN (or a sub-frame number or a slot number) when the UL signal is transmitted to correct the plurality of UE-ID candidates. For example, when a plurality of notified UE-ID candidates are "ID#1, ID#2, and ID#3" and SFN when the UL signal is transmitted is "2", the corrected UE-ID candidates are "ID#2, ID#4, and ID#6".

### [Correction Method 3 (Orthogonalization at SFN/Sub-frame/Slot)]

The user equipment UE adds the product of SFN (or a sub-frame number or a slot number) when the UL signal is transmitted and "the number of UE-ID candidates" to a plurality of UE-ID candidates to correct the plurality of UE-ID candidates. For example, when a plurality of notified UE-ID candidates are "ID#1, ID#2, and ID#3" and SFN when the UL signal is re-transmitted is "1", the corrected UE-ID candidates are "ID#4, ID#5, and ID#6". Similarly, when SFN when the UL signal is re-transmitted is "2", the corrected UE-ID candidates are "ID#7, ID#8, and ID#9". Similarly, when SFN when the UL signal is re-transmitted is "3", the corrected UE-ID candidates are "ID#10, ID#11, and ID#12". That is, according to correction method 3, whenever SFN/sub-frame/slot are changed, the corrected UE-ID candidates are orthogonalized (that is, the corrected UE-ID candidates for each SFN/sub-frame/slot do not overlap each other).

When the above-mentioned correction methods are used, the UE-ID selected by the user equipment UE does not vary depending on the time when the user equipment UE transmits the UL signal. Therefore, it is possible to reduce the possibility of UE-ID contention.

The above-mentioned UE-ID candidate correction methods may be combined with each other when Step S45 of Fig. 6 is performed. For example, in Step S45 of Fig. 6, the base station eNB may not allocate a new UE-ID, but may notify the user equipment UE of a flag (for example, 1 bit) indicating that the UE-ID does not overlap the UE-IDs of other units of user equipment UE. In addition, when receiving the flag, the user equipment UE may perform predetermined calculation for the plurality of UE-ID candidates notified by the base station eNB to correct the UE-ID candidates and may select one UE-ID to be used to re-transmit the UL signal from the corrected UE-ID candidates. In this case, the corrected UE-IDs can be used only when the base station eNB detects that the UE-IDs of a plurality of units of user equipment UE have overlapped each other.

### <Functional configuration>

An example of the functional configurations of the user equipment UE and the base station eNB for performing the operations in the plurality of embodiments are described.

### (User Equipment)

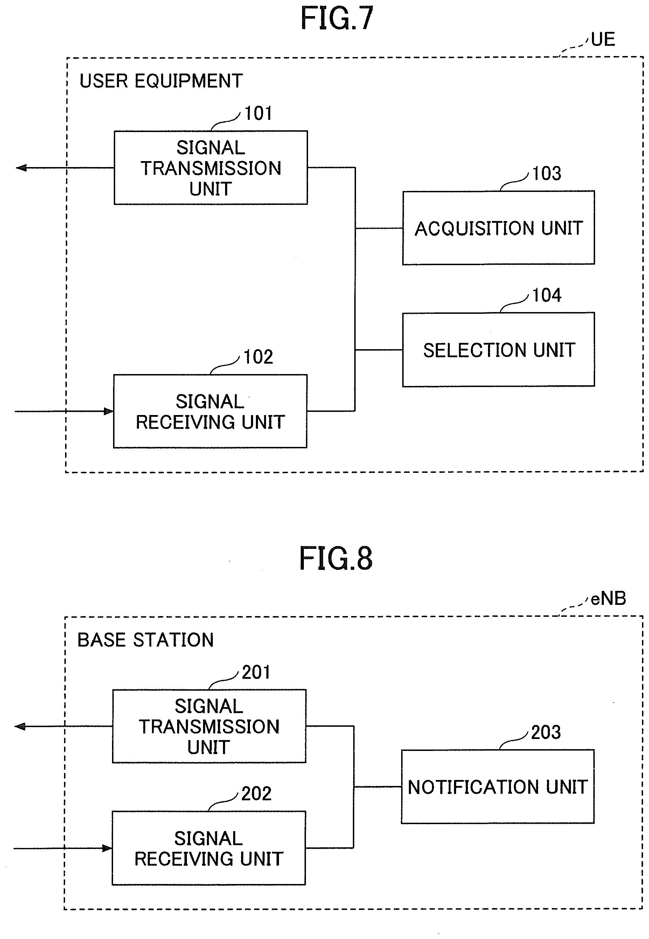

Fig. 7 is a diagram illustrating an example of the functional configuration of the user equipment according to the embodiment. As illustrated in Fig. 7, the user equipment UE includes a signal transmission unit 101, a signal receiving unit 102, an acquisition unit 103, and a selection unit 104. Fig. 7 illustrates only the functional units of the user equipment UE which are particularly related to the embodiment of the invention and the user equipment UE has at least a function (not illustrated) for performing the operation based on LTE. The functional configuration illustrated in Fig. 7 is just an example. The functional units may be classified in any way or may have any names as long as they can perform the operations related to this embodiment. However, some (for example, only one specific modification and embodiment or a plurality of modifications and embodiments) of the above-mentioned processes of the user equipment UE may be performed.

The signal transmission unit 101 has a function of generating various signals in a physical layer from signals in a higher layer which are to be transmitted from the user equipment UE and wirelessly transmitting the generated signals. In addition, the signal transmission unit 101 has a function of transmitting an uplink signal to the base station eNB according to the procedure defined by the access method used in this embodiment. The signal transmission unit 101 has a function of transmitting an uplink shared channel signal to the base station eNB, without resolving the UE-ID contention. The signal transmission unit 101 has a function of the uplink shared channel signal, using the UE-ID selected by the selection unit 104. The signal transmission unit 101 may generate an arbitrary random value, insert the generated random value in the uplink shared channel signal, and transmit the uplink shared channel signal.

The signal receiving unit 102 has a function of wirelessly receiving various signals from other units of user equipment UE or the base station eNB and acquiring signals in the higher layer from the received signals in the physical layer.

The acquisition unit 103 has a function of acquiring a plurality of UE-ID candidates from the base station eNB.

The selection unit 104 has a function of selecting any one of the plurality of UE-ID candidates. In addition, the selection unit 104 may perform predetermined calculation for the plurality of UE-ID candidates to correct the plurality of UE-ID candidates and select any one of the plurality of corrected UE-ID candidates.

### (Base Station)

Fig. 8 is a diagram illustrating an example of the functional configuration of the base station according to the embodiment. As illustrated in Fig. 8, the base station eNB includes a signal transmission unit 201, a signal receiving unit 202, and a notification unit 203. Fig. 8 illustrates only the functional units of the base station eNB which are particularly related to the embodiment of the invention and the base station eNB has at least a function (not illustrated) for performing the operation based on LTE. The functional configuration illustrated in Fig. 8 is just an example. The functional units may be classified in any way or may have any names as long as they can perform the operations related to this embodiment. However, some (for example, only one specific modification and embodiment or a plurality of modifications and embodiments) of the above-mentioned processes of the base station eNB may be performed.

The signal transmission unit 201 has a function of generating various signals in the physical layer from signals in the higher layer which are to be transmitted from the base station eNB and wirelessly transmitting the generated signals. The signal receiving unit 202 has a function of wirelessly receiving various signals from the user equipment UE and acquiring signals in the higher layer from the received signals in the physical layer.

The notification unit 203 has a function of notifying the user equipment UE of a plurality of UE-ID candidates.

The entire functional configuration of each of the user equipment UE and the base station eNB may be implemented by a hardware circuit (for example, one or a plurality of IC chips). Alternatively, a portion of the functional configuration may be implemented by a hardware circuit and the other portion of the functional configuration may be implemented by a CPU and a program.

### (User Equipment)

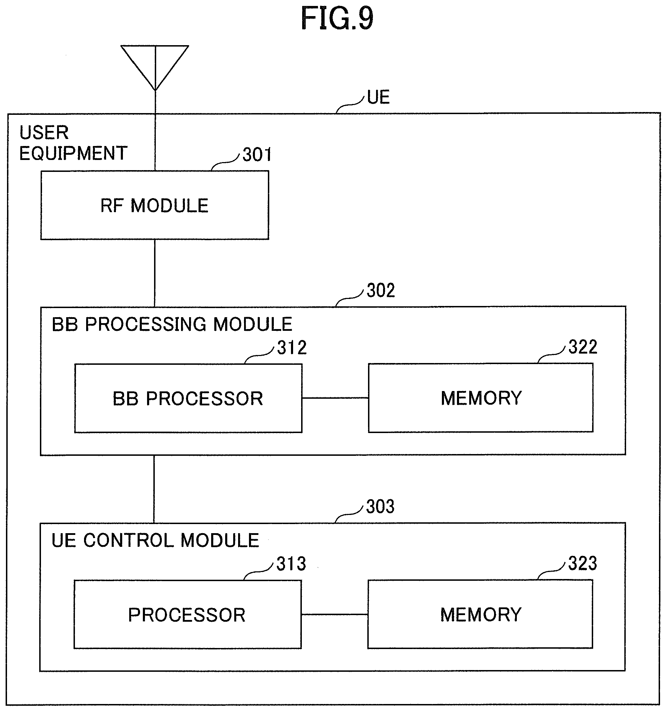

Fig. 9 is a diagram illustrating an example of the hardware configuration of the user equipment according to the embodiment. Fig. 9 illustrates a configuration that is closer to an implementation example than that illustrated in Fig. 7. As illustrated in Fig. 9, the user equipment UE includes a radio frequency (RF) module 301 that performs a process related to radio signals, a base band (BB) processing module 302 that processes base band signals, and a UE control module 303 that processes, for example, the higher layer.

The RF module 301 performs, for example, digital-to-analog (D/A) conversion, modulation, frequency conversion, and power amplification for the digital base band signal received from the BB processing module 302 to generate a radio signal to be transmitted from an antenna. In addition, the RF module 301 performs, for example, frequency conversion, analog-to-digital (A/D) conversion, and demodulation for a received radio signal to generate a digital base band signal and transmits the digital base band signal to the BB processing module 302. The RF module 301 includes, for example, a portion of the signal transmission unit 101 and the signal receiving unit 102 illustrated in Fig. 7.

The BB processing module 302 performs a conversion process between an IP packet and a digital base band signal. A digital signal processor (DSP) 312 is a processor that performs signal processing in the BB processing module 302. A memory 322 is used as a work area of the DSP 312. The RF module 301 includes, for example, a portion of the signal transmission unit 101, a portion of the signal receiving unit 102, the selection unit 104, and the acquisition unit 103 illustrated in Fig. 3.

The UE control module 303 performs, for example, IP layer protocol processing and various kinds of application processing. A processor 313 performs the processes performed by the UE control module 303. A memory 323 is used as a work area of the processor 313. The UE control module 303 may include the acquisition unit 103 illustrated in Fig. 7.

### (Base Station)

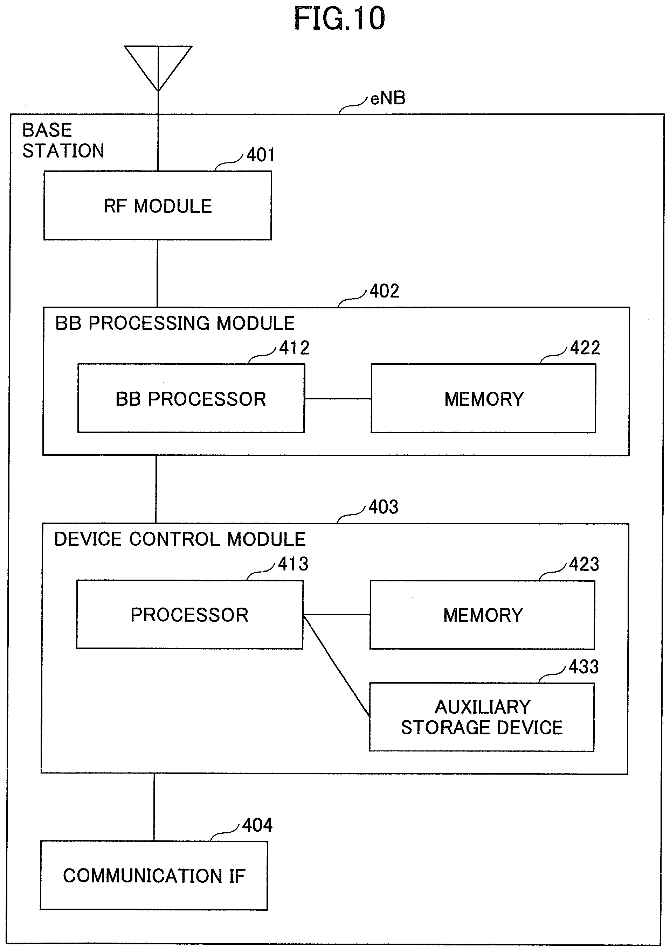

Fig. 10 is a diagram illustrating an example of the hardware configuration of the base station according to the embodiment. Fig. 10 illustrates a configuration that is closer to an implementation example than that illustrated in Fig. 8. As illustrated in Fig. 10, the base station eNB includes an RF module 401 that performs a process related to radio signals, a BB processing module 402 that processes base band signals, a device control module 403 that processes, for example, a higher layer, and a communication IF 404 that is an interface for connection to the network.

The RF module 401 performs, for example, D/A conversion, modulation, frequency conversion, and power amplification for the digital base band signal received from the BB processing module 402 to generate a radio signal to be transmitted from an antenna. In addition, the RF module 401 performs, for example, frequency conversion, A/D conversion, and demodulation for a received radio signal to generate a digital base band signal and transmits the digital base band signal to the BB processing module 402. The RF module 401 includes, for example, a portion of the signal transmission unit 201 and the signal receiving unit 202 illustrated in Fig. 8.

The BB processing module 402 performs a conversion process between an IP packet and a digital base band signal. A DSP 412 is a processor that performs signal processing in the BB processing module 402. A memory 422 is used as a work area of the DSP 412. The BB processing module 402 includes, for example, a portion of the signal transmission unit 201, a portion of the signal receiving unit 202, and the notification unit 203 illustrated in Fig. 8.

The device control module 403 performs, for example, IP layer protocol processing and an operation and maintenance (OAM) process. A processor 413 performs the processes performed by the UE control module 403. A memory 423 is used as a work area of the processor 413. An auxiliary storage device 433 is, for example, an HDD and stores various kinds of setting information used for the operation of the base station eNB. The device control module 403 may include, for example, the notification unit 203 illustrated in Fig. 8.

According to an embodiment, there is provided user equipment of a radio communication system including a base station and the user equipment, the user equipment including a receiver that receives a plurality of user equipment identifier candidates from the base station; a selector that selects one user equipment identifier from the plurality of user equipment identifier candidates; and a transmitter that transmits a signal of an uplink shared channel using the one user equipment identifier that is selected, without performing contention resolution of the user equipment identifier used by the user equipment with the base station. By the user equipment UE, a technique can be provided with which a UE identifier can be appropriately allocated to the user equipment.

The plurality of user equipment identifier candidates may be included in a message transmitted from the base station to the user equipment, and the transmitter may generate an arbitrary random access value and insert the generated random access value in the signal of the uplink shared channel, and transmit the signal of the uplink shared channel. According to this configuration, the base station eNB can detect UE-ID contention.

The selector may correct the plurality of user equipment identifier candidates by applying a predetermined operation to the plurality of user equipment identifier candidates and select one user equipment identifier from the plurality of user equipment identifier candidates that are corrected. As a result, variations can be generated for the UE-ID to be selected by the user equipment UE, so that likelihood of occurrence of the UE-ID contention can be reduced.

According to another embodiment, there is provided a communication method executed by user equipment of a radio communication system including a base station and the user equipment, the communication method including receiving a plurality of user equipment identifier candidates from the base station; selecting one user equipment identifier from the plurality of user equipment identifier candidates; and transmitting a signal of an uplink shared channel using the one user equipment identifier that is selected, without performing contention resolution of the user equipment identifier used by the user equipment with the base station. By the communication method, a technique can be provided with which a UE identifier can be appropriately allocated to the user equipment.

### <Supplementary Explanation of Embodiment>

The configuration of each device (the user equipment UE/the base station eNB) described in the embodiment of the invention may be implemented by the execution of a program by the CPU (processor) in the device including the CPU and the memory, may be implemented by hardware, such as a hardware circuit including a logic for the processes described in this embodiment, or may be implemented by a combination of the program and the hardware.

Notification of information is not limited the aspect/embodiment described in the present specification any may be performed by other methods. For example, notification of information may be performed via physical layer signaling (for example, Downlink Control Information (DCI) or Uplink Control Information (UCI)), upper-layer signaling (for example, RRC signaling, MAC signaling, broadcast information (Master Information Block (MIB), or System Information Block (SIB)), other signals, or by a combination thereof. Moreover, an RRC message may be referred to as the RRC signaling. Furthermore, the RRC message may be an RRC connection setup (RRC Connection Setup) message, a RRC connection reconfiguration (RRC Connection Reconfiguration) message, or the like, for example.

Furthermore, each aspect/embodiment described in this specification can be applied to long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), any other systems using an appropriate system and/or next generation systems expanded on the basis of these systems.

Determination or decision may be made by a value (0 or 1) represented by one bit, may be made by a Boolean value (Boolean: true or false), and may be made by comparison of numerical values (comparison with a predetermined value, for example).

Note that the terms described in this specification and/or the terms necessary for understanding of this specification may be replaced with terms having the same or similar meaning. For example, the channel and/or symbol may be signaling (signal). Furthermore, a signal may be a message.

The UE may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber stations, an access terminal, a mobile terminal, a wireless terminal, a remote terminal, a handset, a user agent, a mobile client, a client, or it may also be called by some other suitable terms.

Each aspect/embodiment described in this specification may be used alone, may be used in combination, or may be used while being switched during the execution. Furthermore, notification of predetermined information (e.g., notification of "being X") is not limited to notification that is made explicitly, and the notification may be made implicitly (e.g., notification of the predetermined information is not performed).

The terms "determining" and "deciding" used in this specification may include various types of operations. For example, "determining" and "deciding" may include deeming that a result of calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The expression "on the basis of" used in the present specification does not mean "on the basis of only" unless otherwise stated particularly. In other words, the expression "on the basis of" means both "on the basis of only" and "on the basis of at least".

In addition, processing procedures, sequences, flowcharts, and the like of each embodiment/modified example described in the specification may be exchanged as long as there is no inconsistency. For example, for the methods described in the specification, the elements of the various steps are presented in an exemplary order and are not limited to a specific order presented.

Input and output Information and the like may be stored in a specific location (for example, a memory) and may be managed by a management table. The input and output information and the like may be overwritten, updated, or rewritten. The output information and the like may be erased. The input information and the like may be transmitted to other apparatuses.

Notification of predetermined information (e.g., notification of "being X") is not limited to notification that is made explicitly, and the notification may be made implicitly (e.g., notification of the predetermined information is not performed).

Information, signals, and the like described in the present specification may be represented using any of various other techniques. For example, data, instructions, commands, information, signals, bits, symbols, chips, and the like mentioned in the entire description may be represented by voltage, current, electromagnetic waves, magnetic field or magnetic particles, optical field or photons, or any combination thereof.

The embodiment of the invention is described above. However, the disclosed invention is not limited to the embodiment, and a person skilled in the art appreciates that various variations, modifications, alterations, and substitutions can be made. Specific numerical examples are used to facilitate the understanding of the invention. However, the numerical values are merely examples and any appropriate values may be used, unless otherwise noted. The classification of the items in the above-mentioned description is not essential in the invention and details described in two or more items may be combined and used, if necessary. Details described in an item may be applied to details described in another item (as long as they do not contradict each other). The boundaries between the functional units or the processing units in the functional block diagram do not necessarily correspond to the boundaries between physical components. The operation of a plurality of functional units may be physically performed by one component. Alternatively, the operation of one functional unit may be physically performed by a plurality of components. In the sequences and the flowcharts described in the embodiment, the order of the processes may be changed as long as there is no contradiction between the processes. For convenience of explanation of the processes, the user equipment UE and the base station eNB are described, using the functional block diagrams. However, the devices may be implemented by hardware, software, or a combination thereof. The software that is operated by the processor included in the user equipment UE according to the embodiment of the invention and the software that is operated by the processor included in the base station eNB according to the embodiment of the invention may be stored in any proper storage media, such as a random access memory (RAM), a flash memory, a read only memory (ROM), an EPROM, an EEPROM, a register, a hard disk (HDD), a removable disk, a CD-ROM, a database, and a server.

In the embodiment, the UE-ID is an example of the user equipment identifier. The access response message is an example of the message transmitted to the user equipment.

This international patent application is based upon and claims the benefit of priority of Japanese Patent Application No. 2016-073459 filed on March 31, 2016, and the entire contents of Japanese Patent Application No. 2016-073459 are incorporated herein by reference.

### LIST OF REFERENCE SYMBOLS

- UE: USER EQUIPMENT
- eNB: BASE STATION
- 101: SIGNAL TRANSMISSION UNIT
- 102: SIGNAL RECEIVING UNIT
- 103: ACQUISITION UNIT
- 104: SELECTION UNIT
- 201: SIGNAL TRANSMISSION UNIT
- 202: SIGNAL RECEIVING UNIT
- 203: NOTIFICATION UNIT
- 301: RF MODULE
- 302: BB PROCESSING MODULE
- 303: UE CONTROL MODULE
- 304: COMMUNICATION IF
- 401: RF MODULE
- 402: BB PROCESSING MODULE
- 403: DEVICE CONTROL MODULE

## Claims

1. User equipment of a radio communication system including a base station and the user equipment, the user equipment comprising:
a receiver that receives a plurality of user equipment identifier candidates from the base station;
a selector that selects one user equipment identifier from the plurality of user equipment identifier candidates; and
a transmitter that transmits a signal of an uplink shared channel using the one user equipment identifier that is selected, without performing contention resolution of the user equipment identifier used by the user equipment with the base station.

2. The user equipment according to claim 1, wherein the plurality of user equipment identifier candidates is included in a message transmitted from the base station to the user equipment, and
wherein the transmitter generates an arbitrary random access value and inserts the generated random access value in the signal of the uplink shared channel, and transmits the signal of the uplink shared channel.

3. The user equipment according to claim 1 or 2, wherein the selector corrects the plurality of user equipment identifier candidates by applying a predetermined operation to the plurality of user equipment identifier candidates and selects one user equipment identifier from the plurality of user equipment identifier candidates that are corrected.

4. A communication method executed by user equipment of a radio communication system including a base station and the user equipment, the communication method comprising:
receiving a plurality of user equipment identifier candidates from the base station;
selecting one user equipment identifier from the plurality of user equipment identifier candidates; and
transmitting a signal of an uplink shared channel using the one user equipment identifier that is selected, without performing contention resolution of the user equipment identifier used by the user equipment with the base station.
